# EUROPEAN PATENT APPLICATION

(11) **EP 1 837 131 A1**
(43) Date of publication of application: **26.09.2007**
(21) Application number: 06005626.4
(22) Date of filing: 20.03.2006
(51) Int. Cl.: B25J 9/16

(54) **Manipulator, for example an industrial robot, and drive device for a manipulator**

(71) Applicant: ABB RESEARCH LTD., 8050 Zürich (CH)
(72) Inventor: Hosini, Falah, 723 51 Västeras (SE); Bird-Radolovic, Ian, 722 33 Västeras (SE); Zelaya de la Parra, Hector, 722 46 Västeras (SE)
(74) Representative: Kock, Ina

(57) **Abstract**

A drive device 7 for a manipulator according to the invention comprises a controller signal input/output means 8, an interconnecting means 9, a position monitoring means 10 and a power supply receiving means 9. The interconnecting means 9 is adapted to connect the drive device 7 to other drive devices such that bi-directional communication is possible between the plurality of drive devices provided in the work place unit 4 of a manipulator. Especially, the interconnecting means 9 is adapted to connect the drive means 7 to an interconnection line ICL which allows communication, preferably serial communication among just the drive devices 7 connected to the interconnection line ICL. An Ethernet line is suitable for being used as a interconnection line ICL according to the invention.

## Description

The present invention relates to manipulators, for example an industrial robot, having several controllable axes. Further, the invention relates to a drive device for manipulators, for example an industrial robot, having several controllable axes.

Manipulators, such as industrial robots, have several, typically six, degrees of freedom, which are addressed as controllable axes. At least one motor is provided for each controllable axis and is supplied with power in a controlled manner by means of a drive device associated with an individual one of said motors. A power supply device is provided to supply electric power to said drive devices. A main controller performs the control operation and provides the drive devices with respective control instructions/data. Usually, the main controller, the main power supply unit and the drive devices are housed in a cabinet remote from the robot work place.

Attempts have been made to arrange the components mentioned above differently. For example, US 6.522.096 B1 discloses a control circuit for a robot power supply allowing such a different arrangement. The robot is equipped with six motors with brakes, which are used for controlling the six axes or shafts of the robot. For supplying the motors with power, driver units are provided each of which being associated with a corresponding one of the motors. The driver units are arranged to permit a direct connection to the mains such that it is only necessary to supply an alternating or three-phase voltage to the robot or its motors. The driver units are further connected to one another and to a control unit by means of a ring line to form a series circuit. Further, the driver units are provided with integrated monitoring units for receiving signals from resolvers each being associated with a respective one of the motors. The control unit sends commands and/or data to the driver units and receives data from the driver units on the ring line. Each driver unit acts on its respective command, for example by adjusting the current flowing to the respective motor as instructed by the control unit or by returning data from the monitoring unit as requested by the control unit.

As it is generally known in the art, the control unit in the above arrangement performs the control function by sending commands and/or data to the driver units and by receiving data from the driver units. Accordingly, regarding the control operation, the above arrangement does not differ from basic arrangements known in the art according to which the main controller is arranged in the same cabinet as the driver units, the cabinet being located remote from the robot work place. Thus, the above arrangement does not lead to an improved control function.

The technical goal of the present invention is to improve the control function of a manipulator. Further, the present invention has been made to improve the response performance of the manipulator. Still further, the present invention aims at utilizing computation power available in the control systems of a manipulator in a more efficient way.

In accordance with one aspect of the present invention, a manipulator, for example an industrial robot, is provided which comprises a main controller, a main power supply unit, a plurality of drive means for moving the manipulator with respect to one of a plurality of controllable axes, each drive means comprising at least one motor, a plurality of position indicating means for indicating a position of one of said plurality of controllable axes, each position indicating means being associated with a respective one of said plurality of drive means, and a plurality of drive devices each for supplying and controlling said at least one motor of a respective one of said plurality of drive means, each drive device comprising: controller signal input/output means for connecting said drive device to said main controller, interconnecting means for interconnecting said plurality of drive devices independently from a connection with said main controller, position monitoring means for obtaining position information from a respective one of said plurality of position indicating means and power supply receiving means for receiving a supply of electric power for being supplied to said at least one motor.

In accordance with another aspect of the invention, a drive device is provided for supplying and controlling at least one of a plurality of motors provided in a manipulator, said manipulator further comprising a main controller, a main power unit, a plurality of drive means and a plurality of position indicating means, said drive device comprising: controller signal input/output means for connecting said drive device to said main controller, interconnecting means for interconnecting a plurality of drive devices independently from a connection with said main controller, position monitoring means for obtaining position information from a respective one of said plurality of position indicating means and power supply receiving means for receiving a supply of electric power for being supplied to said at least one motor.

Due to the interconnecting means comprised by the above manipulator and the above drive device an interconnection between the drive devices, which are located on or in the vicinity of the work place unit of the manipulator, is provided allowing communication among the drive devices independently of the communication with the main controller. The independent communication among the drive devices allows sharing of the computing/controlling power of each drive device in an effective manner, for example by performing parallel processing or the like. Also, safety operations can be performed very effectively due to the independent communication channel, which is made available by means of the interconnecting means according to the invention. Further, since any data can be transferred between the drive devices using an interconnection independent from the communication connection with the main controller, specific control operations can be performed much faster, when the drive devices are arranged to exchange/transfer respective instructions and/or data directly via the drive device interconnection according to the invention.

Further advantages and features of the invention can be gathered from the claims and the following description of preferred embodiments of the invention, with reference to the drawings, in which:
- Fig. 1: is a schematic block diagram of a first embodiment of a manipulator according to the invention; and
- Fig. 2: is a schematic block diagram of a drive device for a manipulator according to the invention.

In the following description of a preferred embodiment of the invention reference will be made to a manipulator comprising six controllable axes each of which being equipped with one motor. In the Figures only three of the controllable axes are explicitly shown. However, it is noted that the invention is not limited with respect to the number of controllable axes but is usable also to control manipulators having a different number of controllable axes and/or motors.

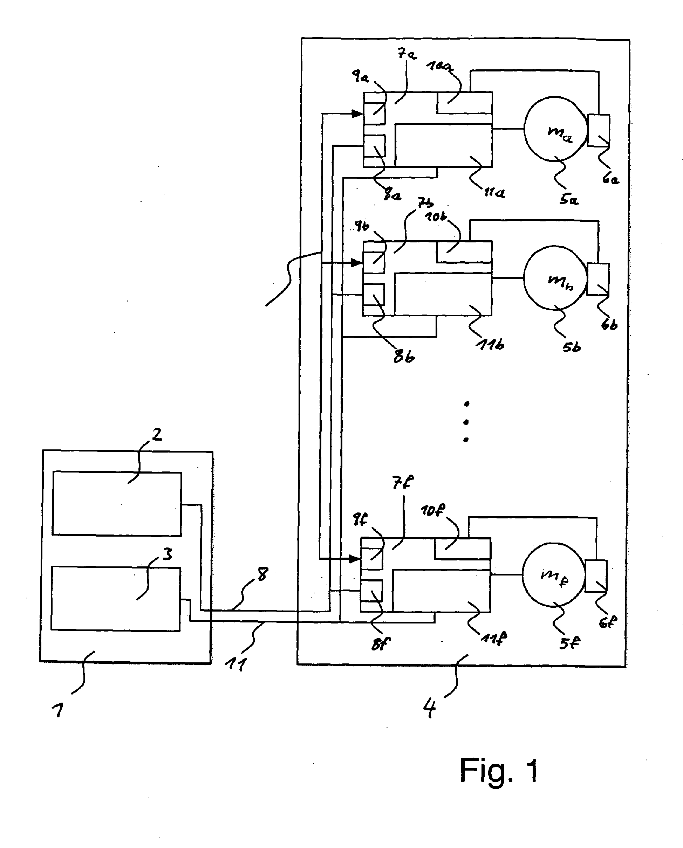

As shown in Fig. 1, the manipulator comprises a remote unit or cabinet 1 serving as a housing for a main controller 2 and a power supply unit 3. Further, the manipulator comprises a work place unit 4, which is typically located remote from cabinet 1 and which is linked to the cabinet via power lines and signal lines as will be come apparent from the description further below.

The work place unit 4 comprises on the one hand all mechanically operating components of the manipulator which define the at least six controllable axes a to f of the manipulator, including electrical motors and on the other hand electric/electronic units for supplying power to the electric motors and, at the same time, for controlling the power supply to the electric motors driving the mechanical parts of the controllable axes. Thus, the electric motors are supplied with electric power in a controlled manner.

As shown in Fig. 1, the work place unit 4 comprises six motors m. The motors ma to mf are shown in Fig. 1 also to represent drive means 5a, 5b, ..., 5f which comprise further mechanical parts required for moving the manipulator with respect to one of the six controllable axes a to f. The drive means 5a...5f for moving the manipulator in its plurality degrees of freedom are associated with individual ones of a respective plurality of position indicating means 6a, 6b, ..., 6f, for example a resolver or an encoder. Each of the drive means 5a...5f and each of the position indicating means 6a...6f are connected to a respective one of a plurality of drive devices 7a, 7b, ..., 7f, which are also arranged as part of the work place unit 4 of the manipulator according to the invention.

Specifically, each of the drive devices 7a...7f is adapted for supplying and controlling the motor m of the associated drive means 5a...5f.

Each of the drive devices 7a...7f according to the invention comprises input/output means 8a, 8b, ..., 8f for connecting the drive device to the main controller 2 such that a bi-directional communication is possible between the main controller 2 and the drive devices 7a...7f. Accordingly, a signal line 8 is present in the embodiment of the invention shown in Fig.1 which signal line 8 connects the main controller 2 and the drive devices 7a...7f.

Each of the drive devices 7a...7f according to the invention comprises interconnecting means 9a, 9b, ..., 9f for interconnecting the drive devices such that communication is possible between the plurality of drive devices provided in the work place unit 4 of the manipulator according to the invention. By being interconnected independently from the connection with the main controller 2, the drive devices 7a...7f according to the invention are able to communicate with each other, for example to perform parallel processing and/or to exchange of data. The independent interconnection between the drive devices 7a...7f provides the possibility to share resources available in each of the drive devices 7a...7f such that, for example, a drive device which momentarily does not perform any control operation regarding the associated drive means and motor may perform calculations requested by another drive device momentarily performing a control operation with respect to the associated drive means and motor. The independent interconnection between the drive devices 7a...7f is, for example, especially suitable for performing safety control operations since the work place unit 4 can be controlled by the drive devices 7a...7f independently from the main controller 2. Further, due to the independent interconnection between the drive devices 7a...7f certain control operations can be performed in a much faster manner when utilizing the independent interconnection thereby improving the overall response of the work place unit 4 of the manipulator according to the invention. When, for example one of the drive devices requires a certain control operation to be performed by another one of the drive devices, a direct communication can occur via the independent interconnection 9 between the drive devices 7a...7f, which are equipped with respective interconnecting means 9a...9f according to the invention.

The drive devices 7a...7f according to the invention are further equipped with position monitoring means 10a, 10b, ..., 10f, which are connected to a respective one of the position indicating means 6a...6f, for example a resolver or encoder. Each of the position monitoring means 10a...10f receives information indicative of the position of the respective controllable axis of the manipulator. The signal of the resolver or the encoder is received by the position monitoring means 10a...10f and processed to obtain position information for the respective controllable axis suitable to be included in the process of controlling said controllable axis by supplying power to the motor m of the corresponding drive means 5a...5f in a controlled manner. The supply of power to a respective one of the motors m of the drive means 5a...5f is performed by individual power supply receiving means 11a, 11b, ..., 11f, which is also comprised by each of the drive devices 7a...7f according to the invention. The power supply receiving means 11a...11f are connected to the power supply unit 3 via power supply line 11 to receive a supply of electric power such that the required electric power can be supplied to motor m of the associated drive means 5a...5f in the work place unit 4 of the manipulator according to the invention.

As can be seen in Fig. 1, the cabinet 1 housing the main controller 2 as well as the main power supply unit 3 and the work place unit 4 are linked only via signal line 8 and power supply line 11. As mentioned above, signal line 8 is provided to connect the drive devices 7a...7f with the main controller 2 for communication purposes. Power supply line 11 is provided to supply electric power from the main power supply unit 3 to each of the drive devices 7a...7f, which comprise power supply receiving means 11a...11f such that electric power can be received and supplied to the motor m of the drive means 5a...5f in a controlled manner.

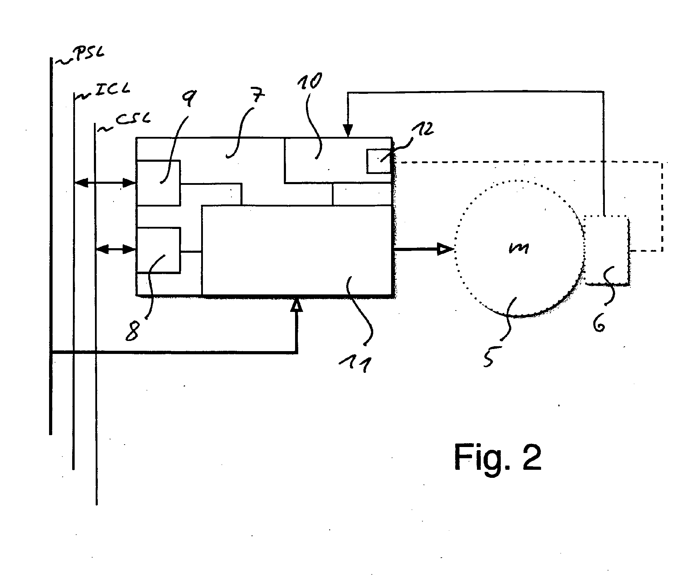

Fig. 2 shows in greater detail a drive device 7 according to the invention whereas the drive means 5 including motor m and the position indicating means 6 are shown in dotted lines, as they will not be discussed in any greater detail below. The drive device 7, shown in Fig. 2, comprises a controller signal input/output means 8, an interconnecting means 9, a position monitoring means 10 and a power supply receiving means 9.

The controller signal input/output means 8 are adapted for connecting the drive device 7 to the main controller 2 such that a bi-directional communication is possible between the main controller 2 and drive device 7. Especially, as shown in Fig. 2, the controller signal input/output means 8 is adapted to connect the drive means 7 to a control signal line CSL which allows communication, preferably serial communication among all devices connected to the control signal line CSL, specifically the drive devices 7 and the main controller 2. An Ethernet line is suitable for being used as a control signal line CSL according to the invention.

As can be taken from Fig. 2, the interconnecting means 9 are adapted to connect the drive device 7 to other drive devices such that bi-directional communication is possible between the plurality of drive devices provided in the work place unit 4 of the manipulator according to the invention. Especially, as shown in Fig. 2, the interconnecting means 9 are adapted to connect the drive means 7 to an interconnection line ICL which allows communication, preferably serial communication among just the drive devices 7 connected to the interconnection line ICL. An Ethernet line is suitable for being used as an interconnection line ICL according to the invention.

It should be noted, that the control signal input/output means 8 and the interconnection means 9 according to the invention may be provided in a virtual manner by using the same hardware components, for example Ethernet hardware, of the drive device 7. The independent interconnection between the drive devices according to the invention may then be established by logically differentiating the communication between the drive devices on one hand and between the main controller and the drive devices on the other hand. With respect to safely considerations separate hardware as described further above and in the followings is preferred.

As can be taken further from Fig.2, the position monitoring means 10 is provided to receive signals indicating the position of a respective one of the controllable axes of the manipulator. The position monitoring means 10 determines/monitors the position of the respective axis of the manipulator.

As shown in Fig. 2, the control signal input/output means 8, the interconnecting means 9 and the position monitoring means 10 are connected to the power supply receiving means 11 of the drive device 7 to supply instruction/data signals to the power supply receiving means 11. Further, the power supply receiving means 11 receives the electric power supplied by a main power supply unit (not shown in Fig. 2) via a power supply line PSL. The power supply receiving means 11 performs control operations on the basis of the instruction/data signals received from the control signal input/output means 8, the interconnecting means 9 and the position monitoring means 10.

With reference to Fig. 2, it should be further noted that the drive devices 7 according to the invention may comprise a excitation power supplying means 12 for supplying an excitation current to the position indicating means 6, typically required, for example, in the case of encoders.

It is interesting to note that according to the invention only a single power supply line (PSL) 11 is required to supply electric power to the work place unit 4, see especially Fig. 1, and all drive devices 7 provided there. Thus, the manipulator and drive devices according to the invention also achieve a reduction in cost otherwise caused by the power cables required to connect the drive devices arranged in a cabinet together with the main controller and the main power supply with the drive means 5 to the motors m provided in the work place unit 4.

## Claims

1. Manipulator, for example an industrial robot, comprising:
- a main controller (2),
- a main power supply unit (3),
- a plurality of drive means (5a...5f), each drive means for moving the manipulator with respect to one of a plurality of controllable axes and each drive means comprising at least one motor (m),
- a plurality of position indicating means (6a...6f) for indicating a position of one of said plurality of controllable axes, each position indicating means (6a...6f) being associated with a respective one of said plurality of drive means (5a..._5f), and
- a plurality of drive devices (7a...7f) each for supplying and controlling said at least one motor (m) of a respective one of said plurality of drive means (5a...5f), each drive device comprising:
- controller signal input/output means (8a...8f) for connecting said drive device to said main controller (2),
- interconnecting means (9a...9f) for interconnecting said plurality of drive devices independently from a connection with said main controller (2),
- position monitoring means (10a...10f) for obtaining position information from a respective one of said plurality of position indicating means (6a...6f) and
- power supply receiving means (11a...11f) for receiving a supply of electric power for being supplied to said at least one motor (m) .

2. Manipulator according to claim 1, wherein said controller signal input/output means (8a...8f), said interconnecting means (9a...9f) and said position monitoring means (10a...10f) are connected to said power supply receiving means (11a...11f) for providing instruction and/or data signals as a basis for performing the control operation regarding the power supply to said at least one motor (m).

3. Manipulator according to claim 1 or 2, wherein said interconnecting means (9a...9f) are adapted to provide for communication, especially serial communication among the drive devices (7a...7f).

4. Manipulator according to anyone of the preceding claims, wherein said position monitoring means (10a...10f) comprise excitation power supplying means 12 to supply excitation power to said position indicating means (6a...6f).

5. Drive device for supplying and controlling at least one of a plurality of motors (m) provided in a manipulator further comprising a main controller (2), a main power unit (3), a plurality of drive means (5a...5f) and a plurality of position indicating means (6a...6f), said drive device comprising:
- controller signal input/output means (8a...8f) for connecting said drive device to said main controller (2),
- interconnecting means (9a...9f) for interconnecting a plurality of drive devices independently from a connection with said main controller (2),
- position monitoring means (10a... 10f) for obtaining position information from a respective one of said plurality of position indicating means (6a...6f) and
- power supply receiving means (11a...11f) for receiving a supply of electric power for being supplied to said at least one motor (m).

6. Drive device for a manipulator according to claim 5, wherein said controller signal input/output means (8a...8f), said interconnecting means (9a...9f) and said position monitoring means (10a... 10f) are connected to said power supply receiving means (11a...11f) for providing instruction and/or data signals as a basis for performing the control operation regarding the power supply to said at least one motor (m).

7. Drive device for a manipulator according to claim 5 or 6, wherein said interconnecting means (9a...9f) are adapted to provide for communication, especially serial communication among drive devices (7a...7f).

8. Drive device for a manipulator according to anyone of claims 5 to 7, wherein said position monitoring means (lOa...10f) comprise excitation power supplying means 12 to supply excitation power to said position indicating means (6a...6f).

## Amended claims

### Amended claims in accordance with Rule 86(2) EPC.

**1.** Manipulator, for example an industrial robot, comprising:
- a main controller (2),
- a main power supply unit (3),
- a plurality of drive means (5a...5f), each drive means for moving the manipulator with respect to one of a plurality of controllable axes and each drive means comprising at least one motor (m),
- a plurality of position indicating means (6a...6f) for indicating a position of one of said plurality of controllable axes, each position indicating means (6a...6f) being associated with a respective one of said plurality of drive means (5a...5f), and
- a plurality of drive devices (7a...7f) each for supplying and controlling said at least one motor (m) of a respective one of said plurality of drive means (5a...5f), each drive device comprising:
- controller signal input/output means (8a...8f) for connecting said drive device to said main controller (2),
- interconnecting means (9a...9f) for interconnecting said plurality of drive devices independently from a connection with said main controller (2),
- position monitoring means (10a...10f) for obtaining position information from a respective one of said plurality of position indicating means (6a...6f) and
- power supply receiving means (11a...11f) for receiving a supply of electric power for being supplied to said at least one motor (m),
wherein said drive devices are adapted to communicate with each other via the interconnecting means.

**2.** Manipulator according to claim 1, wherein said controller signal input/output means (8a...8f), said interconnecting means (9a...9f) and said position monitoring means (10a...10f) are connected to said power supply receiving means (11a...11f) for providing instruction and/or data signals as a basis for performing the control operation regarding the power supply to said at least one motor (m).

**3.** Manipulator according to claim 1 or 2, wherein said interconnecting means (9a...9f) are adapted to provide for communication, especially serial communication among the drive devices (7a...7f).

**4.** Manipulator according to anyone of the preceding claims,
wherein said position monitoring means (10a...10f) comprise excitation power supplying means 12 to supply excitation power to said position indicating means (6a...6f).

**5.** Drive device for supplying and controlling at least one of a plurality of motors (m) provided in a manipulator further comprising a main controller (2), a main power unit (3), a plurality of drive means (5a...5f) and a plurality of position indicating means (6a...6f), said drive device comprising:
- controller signal input/output means (8a...8f) for connecting said drive device to said main controller (2),
- interconnecting means (9a...9f) for interconnecting a plurality of drive devices independently from a connection with said main controller (2),
- position monitoring means (10a...10f) for obtaining position information from a respective one of said plurality of position indicating means (6a...6f) and
- power supply receiving means (11a...11f) for receiving a supply of electric power for being supplied to said at least one motor (m).
wherein said drive device is adapted to communicate with another drive device via the interconnecting means.

**6.** Drive device for a manipulator according to claim 5,
wherein said controller signal input/output means (8a...8f), said interconnecting means (9a...9f) and said position monitoring means (10a...10f) are connected to said power supply receiving means (11a...11f) for providing instruction and/or data signals as a basis for performing the control operation regarding the power supply to said at least one motor (m).

**7.** Drive device for a manipulator according to claim 5 or 6, wherein said interconnecting means (9a...9f) are adapted to provide for communication, especially serial communication among drive devices (7a...7f).

**8.** Drive device for a manipulator according to anyone of claims 5 to 7, wherein said position monitoring means (10a...10f) comprise excitation power supplying means 12 to supply excitation power to said position indicating means (6a...6f).
